Europäisches Patentamt

European Patent Office

Office européen des brevets

(11) Veröffentlichungsnummer : **0 030 600**
**B1**

(12) # EUROPÄISCHE PATENTSCHRIFT

(45) Veröffentlichungstag der Patentschrift :
26.01.83

(51) Int. Cl.³ : **G 02 F   1/13**

(21) Anmeldenummer : **80106397.5**

(22) Anmeldetag : **21.10.80**

---

(54) **Flüssigkristallzelle.**

---

(30) Priorität : **12.12.79 DE 2949837**

(43) Veröffentlichungstag der Anmeldung :
**24.06.81· Patentblatt 81/25**

(45) Bekanntmachung des Hinweises auf die Patenterteilung : **26.01.83 Patentblatt 83/04**

(84) Benannte Vertragsstaaten :
**FR GB IT NL SE**

(56) Entgegenhaltungen :
**DE A 2 458 883**
**DE A 2 517 871**
**DE A 2 538 331**
**DE A 2 647 218**
**DE B 2 313 730**
**GB A 1 430 611**

**BAUTEILE REPORT, Band 17, Juni 1979, Heft 3,
Berlin und München MARTIN BECHTELER « Flüssigkristallanzeigen : Bauelemente mit hoher
Zuverlässigkeit », Seiten 121-124.**

(73) Patentinhaber : **VDO Adolf Schindling AG
Gräfstrasse 103
D-6000 Frankfurt/Main (DE)**

(72) Erfinder : **Baeger, Holm, Dr.
Salzbornstrasse 1
D-6231 Schwalbach (DE)**
Erfinder : **Nickol, Friedrich Wilhelm
Am Honigbaum 26
D-6239 Eppstein 4 (DE)**

(74) Vertreter : **Könekamp, Herbert, Dipl.-Ing.
Sodener Strasse 9
D-6231 Schwalbach (DE)**

EP 0 030 600 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Flüssigkristallzelle

Die Erfindung betrifft eine Flüssigkristallzelle nach dem Oberbegriff des Anspruchs 1.

Derartige bekannte Flüssigkristallzellen sind mit zwei im Abstand zueinander angeordneten Glasplatten — sogenannten Zellengläsern — aufgebaut, zwischen denen die Flüssigkristallsubstanz eingeschlossen ist. Auf den Innenseiten der Glasplatten sind durchsichtige Elektroden in Form von Segmenten aufgedampft, welche in Abhängigkeit davon, ob sie mit einer Spannung beaufschlagt werden oder nicht, die optischen Eigenschaften der Flüssigkristallschicht so verändern, daß in Verbindung mit den Polarisationsfiltern ein Kontrasteindruck hervorgerufen wird. — In der Flüssigkristallzelle ist über den Elektroden eine Isolationsschicht aufgetragen, die regelmäßig aus $SiO_2$ besteht. Diese Isolationsschicht dient einerseits als Gleichspannungssperre, andererseits als Diffusionssperre bei Hochtemperaturprozessen und verschleift hohe Feldinhomogenitäten an den Elektrodenkanten. Über der Isolationsschicht ist regelmäßig eine oberflächenanisotrope Schicht aus SiO aufgebracht, die zur Orientierung der Flüssigkristallmoleküle an den Grenzflächen dient.

Der vorbekannte Aufbau üblicher Flüssigkristallzellen mit einer Isolationsschicht aus $SiO_2$ und einer Orientierungsschicht aus SiO hat den Nachteil, daß hohe Reflektionen nicht nur an der Grenzschicht der Elektroden zur Isolationsschicht sondern auch zwischen der Orientierungsschicht und dem Flüssigkristall auftreten, die zu unangenehmen starken Spiegelungen der Elektroden bzw. Schichten führen.

Zur Entspiegelung der Flüssigkristallzelle ist es zwar denkbar, SiO mit einem geeigneten Brechungsindex zu wählen, um Reflektionen an der Grenzschicht zwischen der Orientierungsschicht und dem Flüssigkristall möglichst zu vermeiden. Ein geeigneter Brechungsindex des SiO kann zwar durch die Wahl der Verfahrensparameter bei der Herstellung der SiO-Schicht eingestellt werden, wenngleich dadurch die Herstellung des Schichtsystems noch schwieriger wird. Abgesehen davon folgt aber durch die Einstellung der Orientierungsschicht aus SiO keine Verminderung der Reflektionen an der Grenzschicht zwischen der Elektrode und der Isolationsschicht aus $SiO_2$. Bei einem nachfolgenden Hochtemperaturprozeß, wie das Verschließen mit Glaslot, ändern sich die durch di Wahl der Verfahrensparameter eingestellten optischen Eigenschaften des SiO derart, daß eine Entspiegelung der Elektroden schwierig ist.

Zu der vorliegenden Erfindung gehört daher die Aufgabe, eine Flüssigkristallzelle der eingangs genannten Gattung derart weiterzuentwickeln, daß das Schichtsystem bei möglichst geringem Herstellungsaufwand neben den üblichen Installations- und Orientierungseigenschaften auch gute Entspiegelungseigenschaften aufweist, so daß möglichst geringe Spiegelungen der Elektroden bzw. Schichten auf der Betrachtungsseite auftreten.

Diese Aufgabe wird durch die in dem kennzeichnenden Teil des Anspruchs 1 angegebenen Merkmale der Flüssigkristallzelle gelöst. Zu der Lösung gehört also der Ersatz der bekannten und bisher benutzten Isolationsschicht aus $SiO_2$ durch eine andere Isolationsschicht, die für den Einsatz in Flüssigkristallzellen geeignet ist, mit einem auf das Material der Elektroden und den Flüssigkristall abgestimmten Brechungsindex und einer bestimmten Schichtdicke, die von der Wellenlänge der zur Be- bzw. Durchleuchtung der Flüssigkristallzelle vorgesehenen Lichtquelle abhängt.

Aus der Beziehung für den Brechungsindex der Isolationsschicht ergibt sich bei einem Brechungsindex der transparenten Elektroden aus Indium-Zinnoxid — $In_2O_3/SnO_3$ — von 2 und bei einem Brechungsindex des Flüssigkristalls von etwa 1,65 ein Brechungsindex von etwa 1,82 für die Isolationsschicht. Die Schichtdicke der Isolationsschicht ergibt sich aus diesem Brechungsindex und der Lichtwellenlänge nach der in dem kennzeichnenden Teil angegebenen Beziehung, wobei die Wellenlänge des sichtbaren Strahlenmaximums einer typischen Lichtquelle 550 nm beträgt. Die optische Schichtdicke muß dann ein ungradzahliges Vielfaches von $\lambda/4$ sein. In diesem Fall ergeben sich in der Isolationsschicht Interferenzerscheinungen, die das Bild der Elektrode auslöschen.

Zur Ausführung der Erfindung als besonders vorteilhaft hat sich als Isolationsschicht das Oxid $Y_2O_3$ des Ittriums mit einem Brechungsindex von ca. 1,8 erwiesen. Dieser Brechungsindex liegt sehr dicht an dem optimalen Wert für den Brechungsindex der Elektrode von 2 und dem Brechungsindex des Flüssigkristalls von 1,65. Darüber hinaus ist die Isolationsschicht aus $Y_2O_3$ hinsichtlich ihrer Isolationseigenschaften günstig. Sie ist in ihren Herstellungsparametern weitgehend unkritisch und hochtemperaturstabil. Gemäß einer anderen vorteilhaften Ausführungsform besteht die Isolationsschicht aus einem Mischoxid aus jeweils mindestens einem hochbrechenden und einem niedrig brechenden Werkstoff mit einem Gesamtbrechungsindex von ca. 1,8. Eine solche Schicht kann durch entsprechende Wahl der Werkstoffe hinsichtlich ihrer Isolations-, Herstellungs- und Temperatureigenschaften besonders gut optimiert werden. Als vorteilhaft haben sich Mischoxide aus Titan ($TiO_2$) und Silizium ($SiO_2$) bzw. aus Zinn ($SnO_2$) erwiesen.

Damit wird also durch eine verhältnismäßig wenig aufwendige Maßnahme die Entspiegelung der Flüssigkristallzelle verbessert. Die Schicht aus $Y_2O_3$ bzw. die Mischoxid-Schicht ist außerdem glaslotkompatibel und zeigt ein gutes optisches Allgemeinverhalten. Die zu erwartende Lebensdauer ist hoch.

Eine weitere erhebliche Verbesserung der Flüssigkristallzelle wird dadurch erreicht, daß die Orientierungsschicht aus dem gleichen Material wie die Isolationsschicht besteht.

Damit ist es möglich, die Isolationsschicht und Orientierungsschicht als eine einzige Schicht in einem einzigen Verfahrensschritt mit einem Material herzustellen. Dieses Material hat einen einheitlichen Brechungsindex. Schwierige Verfahrensschritte beim Aufbringen mehrerer Schichten, zuletzt einer Orientierungsschicht mit definierten optischen Eigenschaften wie die bekannte SiO-Schicht, entfallen. Zudem können Reflexionen an der Orientierungsschicht, wie sie bei den bekannten Flüssigkristallzellen vorkommen, hier nicht mehr auftreten.

Eine Ausführungsform in der Flüssigkristallzelle gemäß der Erfindung wird anhand einer schematisierten Darstellung, welche die Flüssigkristallzelle in einem Längsschnitt zeigt, erläutert. Die Flüssigkristallzelle ist symmetrisch zur Mittellinie 1 mit einem Zellenglas 2 und einem gegenüberliegenden nicht dargestellten Zellenglas aufgebaut. Über dem Zellenglas ist ein Polarisationsfilter 3 angebracht. Auf der dem anderen Zellenglas zugewandten Seite des Zellenglases 2 sind auf dieser Elektroden 4 und 5 aus Indium-Zinnoxid (ITO) aufgedampft. Über den Elektroden zum Innern der Flüssigkristallzelle hin befindet sich eine einzige Schicht 6, die zugleich eine Isolationsschicht und eine Orientierungsschicht darstellt. Diese Schicht 6 besteht aus Ittrium-Oxid ($Y_2O_3$). Diese Schicht aus $Y_2O_3$ kann unter veränderlichen Winkeln in einem Vakuumverfahrensschritt auf die transparenten Elektroden 4 und 5 aufgebracht werden. Der Brechungsindex dieser $Y_2O_3$-Schicht beträgt etwa 1,8 und die Schichtdicke ist so gewählt, daß das Produkt aus Schichtdicke und Brechungsindex einem ungradzahligen Vielfachen von $\lambda/4$ entspricht, wobei $\lambda$ für eine typische nicht dargestellte Beleuchtungseinrichtung 550 nm ist. Je nach der Dicke der Segmentelektroden beträgt die Dicke der kombinierten Isolations- und Orientierungsschicht zwischen 30 und 80 nm. Damit wird eine sehr gute Entspiegelung der Elektroden 4 und 5 aus Indium-Zinnoxid mit einem Brechungsindex von 2 zu der Flüssigkristallschicht 7 mit einem Brechungsindex, der für viele Flüssigkristallmischungen zwischen 1,5 und 1,7 liegt, erzielt. In der beschriebenen Ausführungsform lassen sich insbesondere sehr leicht Entspiegelungsorientierungsschichten erzeugen, die dem Flüssigkristall eine verkippt homöotrope Orientierung geben. Diese Orientierung wird z.B. bei der Herstellung von DRP- und DSM-Flüssigkristallzellen sowie von dichroitischen Flüssigkristallzellen benötigt. Die Wahl der Verfahrensparameter wie Aufdampfdruck oder Aufdampfwinkel ist dabei weitgehend unkritisch. Darüber hinaus läßt sich bei der erfindungsgemäßen Schicht durch Reiben eine homogene Orientierung mit kleinem Tiltwinkel ohne Schwierigkeiten erzeugen. Dies ist ein weiterer besonderer Vorteil der Erfindung.

Die Verwendung von Yttriumoxid bzw. des Titan-Silizium-Oxidgemischs bzw. anderer Oxidgemische nach der Erfindung führt darüber hinaus zu einer besonders gleichspannungsfesten Flüssigkristallzelle, so daß eine solche Flüssigkristallzelle besonders gut zum Einsatz in Kraftfahrzeugen geeignet ist.

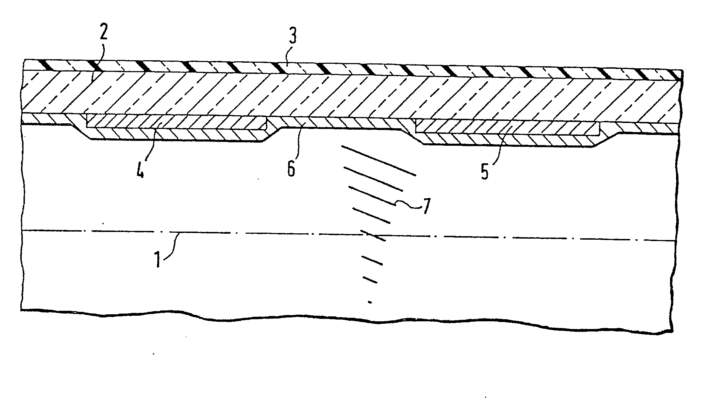

## Ansprüche

1. Flüssigkristallzelle, in der auf der transparente Elektroden tragenden Seite eines Zellenglases eine als Gleichspannungssperre und Diffusionssperre wirksame transparente Isolationsschicht über die Elektroden aufgetragen ist, über die gegebenenfalls eine oberflächenanisotrope Orientierungsschicht zur Orientierung der Flüssigkristallmoleküle angeordnet ist, dadurch gekennzeichnet, daß zur Entspiegelung der Elektroden die Isolationsschicht aus einem Material mit einem Brechungsindex $n_{oxid}$ besteht, der annähernd der Beziehung $n_{oxid} = \sqrt{n_{ITO} \cdot n_{FK}}$ genügt, worin ist

$n_{ITO}$ = Brechungsindex des Elektrodenmaterials, vorzugsweise Indium-Zinnoxid

$n_{FK}$ = Brechungsindex des Flüssigkristalls und deren Dicke $d_{oxid}$ nach der Beziehung

$d_{oxid} \cdot n_{oxid} = (2m + 1) \lambda/4$

dimensioniert ist, worin

$\lambda$ = Wellenlänge des sichtbaren Strahlungsmaximums der zur Beleuchtung der Flüssigkristallzelle verwendeten Lichtquelle ist und

$m$ = eine ganze Zahl ist.

2. Flüssigkristallzelle nach Anspruch 1, dadurch gekennzeichnet, daß als Isolationsschicht das Oxid $Y_2O_3$ des Ittriums mit einem Brechungsindex von ca. 1,8 vorgesehen ist.

3. Flüssigkristallzelle nach Anspruch 1, dadurch gekennzeichnet, daß als Isolationsschicht ein Mischoxid aus jeweils mindestens einem hoch brechenden Werkstoff und einem niedrig brechenden Werkstoff mit einem Gesamtbrechungsindex von ca. 1,8 vorgesehen ist.

4. Flüssigkristallzelle nach Anspruch 3, dadurch gekennzeichnet, daß als Isolationsschicht ein Mischoxid aus Titan und Silizium vorgesehen ist.

5. Flüssigkristallzelle nach Anspruch 3, dadurch gekennzeichnet, daß als Isolationsschicht ein Mischoxid aus Zinn und Silizium vorgesehen ist.

6. Flüssigkristallzelle nach einem der Ansprüche 1 bis 5, dadurch gekennzeichnet, daß die Orientierungsschicht aus dem gleichen Material wie die Isolationsschicht besteht.

7. Flüssigkristallzelle nach Anspruch 2 und 6, dadurch gekennzeichnet, daß die Orientierungsschicht aus $Y_2O_3$ eine verkippt homöotrope Orientierung erzeugt.

8. Flüssigkristallzelle nach einem der Ansprüche 1 bis 7, dadurch gekennzeichnet, daß sich durch Reiben eine homogene Orientierung mit kleinem Tiltwinkel ergibt.

## Claims

1. Liquid crystal cell, in which a transparent insulating layer acting as a direct voltage barrier and diffusion barrier is applied to the side, which carries transparent electrodes, of a cell glass above the electrodes, a surface-anisotropic orienting layer for orienting the liquid crystal molecules being provided, if desired, above the insulating layer, characterized in that, for blooming the electrodes, the insulating layer consists of a material having an index of refraction $n_{oxide}$, which approximately satisfies the relationship $n_{oxide} = \sqrt{n_{ITO} \times n_{LC}}$, where

$n_{ITO}$ = index of refraction of the electrode material, preferably indium tin oxide

$n_{LC}$ = index of refraction of the liquid crystal the thickness $d_{oxide}$ of the insulating layer being dimensioned according to the equation

$d_{oxide} \times n_{oxide} = (2m + 1) \lambda/4$, where

$\lambda$ = wavelength of the visible radiation maximum of the light source used for illuminating the liquid crystal cell and

m = an integer.

2. Liquid crystal cell according to Claim 1, characterized in that the oxide $Y_2O_3$ of yttrium having an index of refraction of about 1.8 is provided as the insulating layer.

3. Liquid crystal cell according to Claim 1, characterized in that a mixed oxide of in each case at least one highly refractive material and one weakly refractive material, having an overall index of refraction of about 1.8, is provided as the insulating layer.

4. Liquid crystal cell according to Claim 3, characterized in that a mixed oxide of titanium and silicon is provided as the insulating layer.

5. Liquid crystal cell according to Claim 3, characterized in that a mixed oxide of tin and silicon is provided as the insulating layer.

6. Liquid crystal cell according to one of Claims 1 to 5, characterized in that the orienting layer consists of the same material as the insulating layer.

7. Liquid crystal cell according to Claims 2 and 6, characterized in that the orienting layer of $Y_2O_3$ produces a tilted homeotropic orientation.

8. Liquid crystal cell according to one of Claims 1 to 7, characterized in that a homogeneous orientation with a small tilt angle is obtained by rubbing.

**Revendications**

1. Cellule de cristal liquide dans laquelle, du côté d'un verre de cellule supportant des électrodes transparentes, est appliquée en dessus de ces électrodes une couche transparente d'isolation agissant comme une barrière de tension continue et comme une barrière de diffusion et en dessus de laquelle est éventuellement placée une couche d'orientation superficielle anisotrope pour l'orientation des molécules de cristal liquide, cellule caractérisée par le fait que, pour supprimer les reflets des électrodes, la couche isolante consiste en une matière présentant un indice de réfraction $n_{oxvde}$, qui satisfait approximativement au rapport $n_{oxyde} = \sqrt{n_{ITO} \cdot n_{FK}}$, où

$n_{ITO}$ = indice de réfraction de la matière des électrodes, de préférence de l'oxyde d'indium-oxyde stannique

$n_{FK}$ = indice de réfraction du cristal liquide et dont l'épaisseur $d_{oxvde}$ est dimensionnée selon le rapport $d_{oxyde} \cdot n_{oxyde} = (2m + 1) \lambda/4$, où

$\lambda$ = longueur d'onde du maximum de rayonnement visible de la source lumineuse utilisée pour éclairer la cellule de cristal liquide et

m = un nombre entier.

2. Cellule de cristal liquide selon la revendication 1, caractérisée par le fait que, en guise de couche isolante, il est prévu l'oxyde $Y_2O_3$ de l'yttrium présentant un indice de réfraction d'environ 1,8.

3. Cellule de cristal liquide selon la revendication 1, caractérisée par le fait qu'il est prévu en guise de couche isolante un oxyde mixte comprenant à chaque fois au moins une matière à forte réfraction et une matière à faible réfraction, avec un indice de réfraction global d'environ 1,8.

4. Cellule de cristal liquide selon la revendication 3, caractérisée par le fait qu'il est prévu en guise de couche isolante un oxyde mixte de titane et de silicium.

5. Cellule de cristal liquide selon la revendication 3, caractérisée par le fait qu'il est prévu en guise de couche isolante un oxyde mixte d'étain et de silicium.

6. Cellule de cristal liquide selon l'une des revendications 1 à 5, caractérisée par le fait que la couche d'orientation consiste en la même matière que la couche isolante.

7. Cellule de cristal liquide selon les revendications 2 et 6, caractérisée par le fait que la couche d'orientation en $Y_2O_3$ provoque une orientation homéotrope inversée.

8. Cellule de cristal liquide selon l'une des revendications 1 à 7, caractérisée par le fait qu'il se produit par friction une orientation homogène avec un petit angle d'inclinaison.